(19) Europäisches Patentamt
European Patent Office
Office européen des brevets

(11) Publication number: **0 087 295**
**B1**

(12) **EUROPEAN PATENT SPECIFICATION**

(45) Date of publication of patent specification: **10.12.86**

(51) Int. Cl.⁴: **A 01 N 31/12,** A 01 N 31/16, C 02 F 1/50

(21) Application number: **83300863.4**

(22) Date of filing: **18.02.83**

(54) **Water treatment methods and compositions.**

(30) Priority: **22.02.82 GB 8205131**

(43) Date of publication of application: **31.08.83 Bulletin 83/35**

(45) Publication of the grant of the patent: **10.12.86 Bulletin 86/50**

(84) Designated Contracting States: **BE CH DE FR GB IT LI LU NL SE**

(56) References cited:
**DE-C-563 643**
**FR-A-1 582 806**

**CHEMICAL ABSTRACTS, vol. 94, no. 7, 16 February, 1981, page 102, no. 41943u, Columbus, Ohio, US, P. Skaliy et al.: "Laboratory studies of disinfectants against Legionella pneumophila"**

(73) Proprietor: **HOUSEMAN (BURNHAM) LIMITED**
**The Priory**
**Burnham Slough (GB)**

(72) Inventor: **Robinson, Charles Scott**
**49 Stanhope Road**
**Cippenham Slough Berkshire (GB)**
Inventor: **Eycott, Robin William**
**The Skerries Ridgeside Bledlow Ridge**
**Nr. High Wycombe Buckinghamshire (GB)**

(74) Representative: **Lawrence, Peter Robin Broughton et al**
**GILL JENNINGS & EVERY 53-64 Chancery Lane**
**London WC2A 1HN (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the inhibition and prevention of the growth of particular bacteria in the water of recirculating cooling systems.

Recirculating cooling systems are systems in which water is taken from a heater, such as the compressor of an air conditioning system or a heat exchanger of an industrial plant, is cooled and most at least of the cooled water is recirculated to the heater. Usually part at least of the cooling is brought about by evaporation of part of the water and usually the evaporated water is discharged from the system into the atmosphere. Evaporating condensors are one form of such system but the most common form is the cooling tower. In such a tower water is introduced near the top and is trickled over or sprayed over baffles so as to promote contact with air which flows up through the baffles, so as to promote evaporation of water. The cooled water drains down the tower and is recirculated to the heater while a small amount of the water is exhausted from the top of the tower as vapour and a drift of water droplets. Cooling towers and other recirculating cooling systems find wide application, for instance in the air conditioning of hotels, hospitals and other buildings, and in power station and other industrial cooling systems.

It is well known that there is a tendency for bacterial and fungal growth to occur in the water of recirculating cooling systems and so it is common practice to include one or more biocides in the water in order to prevent or control such growth. A wide variety of biocides are known, including the biocides named below.

It is normal practice to determine the effectiveness of a biocide against any particular bacterial or fungal growth by conducting laboratory tests and it is accepted that, for most bacterial and fungal growth, there is a good correlation between the activity in laboratory tests and the activity in recirculating cooling systems. Accordingly, normal practice is to select biocides for plant trials on the basis of laboratory test data, with the result that a biocide that shows poor results in laboratory testing will not be tested on the plant.

In recent years it has been established that diseases known as Legionnaires Disease and Pontiac Fever are caused by bacteria of the class now known as *Legionella,* including particularly *Legionella pneumophila,* and that such bacteria occur quite widely in nature. Despite the wide occurrence of *L. pneumophila* in nature and the frequent use of biocides in recirculating cooling systems there is evidence implicating the growth of *L. pneumophila* in recirculating cooling systems with outbreaks of Legionnaires Disease. It appears that the conditions of pH and temperature that prevail in many such systems promote the growth of *Legionella* and that the drift of water droplets from such systems may spread the bacteria.

Much research has therefore been conducted into determining which biocides are effective for controlling *Legionella* and results of this research are reported in Applied and Environmental Microbiology October 1980 page 697 to 700 by Skaliy et al and January 1981 pages 233 to 236 by Grace et al. The results showed that didecyldimethyl ammonium chloride and N-alkyl dimethyl benzyl ammonium chloride with bis-(tri-n-butyl tin) oxide have the greatest effectiveness in the reported tests but calcium hypochlorite and dibromonitrilopropionamide were also shown to be effective. A biocide containing 9.5% sodium pentachlorophenate and 1.2% sodium salts of other chlorophenols was shown to be of little or no value.

All these tests were conducted under laboratory conditions and the reports stated that studies to determine the effectiveness of biocides in actual use in cooling towers were planned. The uncertainty of these laboratory tests as an indication of effectiveness in practice is emphasised in Refrigeration and Air Conditioning June 1981 pages 25, 26 and 64. Tests in cooling towers have now confirmed that there is no direct relationship between effectiveness in laboratory and effectiveness in practice. This appears to be due, in part at least, to the fact that contamination in practice develops in, for instance, static areas where there is scale or other corrosion or algae growth, with the result that the biocide must not only be effective against Legionella but must also be effective at penetrating into such areas. For instance, the stated quaternary ammonium-dibutyl tin oxide biocide has proved to be of limited value when applied in cooling towers.

We have now made various discoveries as a result of which we provide a composition and method that is effective in cooling towers and other recirculating cooling systems for destroying, or preventing the growth of, *Legionella,* especially *Legionella pneumophila.*

In the invention, *Legionella* is destroyed, or its growth is prevented, in a recirculating cooling system by including in the recirculating water a bis(monohalophenol) compound as a biocide. The invention includes both the method and composition for use in this method. Thus a biocidal composition according to the invention contains a water-soluble biocide and is intended for inhibiting or preventing the growth of *Legionella* bacteria in the water of a recirculating cooling system and is characterised in that the biocide is a bis(monohalophenol) compound.

Fig. 1 illustrates the general formula of the bis(monohalophenol) compounds of the invention.

In DE—C—563643 bisphenol sulphides, including bis(halophenol) sulphides, are described to have bactericidal and fungicidal properties, for example against staphylococcus and streptococcus, mould and mildew, and are incorporated into various compositions as a general disinfectant. There is no disclosure of the use of the compounds in the water of recirculating cooling systems. *Legionella* bacteria had not been

identified at the publication date of the specification.

In FR—A—15182806 5,5'-dichloro-2,2'-dihydroxydiphenyl sulphide is added to a recirculating water system in a paper-making process as a general biocide. There is no suggestion that the compound is useful in cooling systems nor that it has any inhibitory or biocidal activites against *Legionella* bacteria.

The invention is thus based on the surprising discovery that bis(monohalophenol) compounds can give effective inhibition or prevention of the growth of *Legionella* bacteria in actual use in the water of a recirculating cooling system, and indeed seems to give better results than any other biocide proposed for this purpose. This is despite the fact that the mixture described above containing various chlorophenols was reported as being relatively ineffective in laboratory studies.

Preferred bis(monohalophenols) for use in the invention are water soluble compounds of the formula

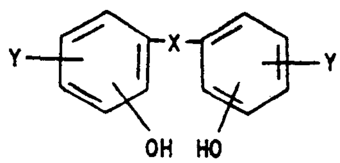

in which the groups Y may be the same or different and represent halogen atoms and the group X represents a divalent radical selected from alkylene groups and hetero atoms.

The halogen atoms represented by Y are generally chlorine or bromine, and most preferably both are chlorine. Preferably they are positioned meta to the linkage contraining X. The group Y preferably is in a metal position with respect to the linkage containing X with the hydroxy groups para to the group Y.

X may represent an alkylene group, preferably methylene, or a hetero atom, for instance oxygen or, most preferably, sulphur.

The preferred biocide for use in the treatment of *Legionella* is bis(chlorophenol)monosulphide, that is to say the compound in which X represents S, each group Y represents chloro in a meta position to the sulphur and the hydroxy groups are in a position para to the chloro. Other suitable compounds are the corresponding compounds in which S is replaced by O and $CH_2$. Compounds containing hydroxy groups may be present in the form of salts with alkali metals, for instance as the sodium salt.

The bis(monohalophenol) is usually used as the only biocide, but it may be used in combination with one or more other biocides if desired.

The chosen compound is preferably added to the recirculating water in the form of a concentrated aqueous solution. The amount that is added must be sufficient to produce a useful effect and will normally be at least 5 ppm and usually at least 20 ppm. Most reliable results are obtained when the amount is at least 40 ppm with dosages of 80 to 200 ppm generally being preferred. It is usually unnecessary to add more than 1,000 ppm, and generally 400 ppm is an adequate maximum.

A difficulty with this and many other biocides is that they tend to cause foaming. Foaming of the recirculating water in a recirculating cooling system can be a serious problem and must be avoided. It is known to add anti-foaming agents to aqueous systems to prevent foaming but this is best avoided if possible and so biocide additions have been conducted in such a manner as to avoid causing foaming. As a result conventional usage of biocides has tended to use rather low dosages and to use biocides that have low foaming potential. Indeed for this reason the preferred biocide for use in the invention bis(chlorophenol)-monosulphide was not, at the time of making the invention, considered to be a satisfactory biocide for use in cooling towers.

In the invention we deliberately use an amount of the biocide such that foaming is likely to be a serious problem and we include also an anti-foam agent that substantially prevents the foaming. As a result the amount of biocide can be raised to relatively high levels, for instance 80 to 1,000 ppm, without encountering foaming problems.

The anti-foam may be any material that is suitable for suppressing foam of the aqueous system in the presence of the biocide. Preferably it is a silicone anti-foam. Such materials are well known commercially. The amount that is added will depend upon the particular materials present in the system and the amounts of the biocide and the quality of the water but generally is from 0.1 to 5% by weight based on the amount of biocide, most preferably about 0.5 to 2%.

The anti-foam may be added to the recirculating water separately from the biocide, provided it is added at a time and a location such as to prevent foam formation, and generally it is added simultaneously with the biocide at the same point of introduction. Preferably it is added in the form of a composition containing the biocide and the anti-foam.

An anti-foam is generally effective as a result of forming a separate phase on the surface of the water and thus is relatively immiscible with water but the biocide is water soluble. If a composition of the water-soluble biocide and the water-immiscible anti-foam is to be supplied for commercial use it is essential that it should be a homogeneous, storage stable, composition. We have now surprisingly found that it is possible to form such a composition.

The invention includes a homogeneous composition suitable for dosage into water and which comprises an aqueous solution of the biocide, the anti-foaming agent, and a coupling agent that holds the anti-foam in homogeneous distribution in the composition but that permits it to serve as an anti-foam when the composition is added to bulk water.

The coupling agent is preferably a non-ionic surfactant. The preferred non-ionic surfactants are polyalkyleneoxylated aliphatic alcohols, most

preferably long chain primary alcohol derivatives. The alcohol may contain 8 to 20 carbon atoms, typically 12 to 18 carbon atoms. The alkyleneoxy groups may be ethylenoxy or propylenoxy groups but preferably they are all ethylenoxy groups. The molecule may contain from 1 to 80 of these groups, generally 5 to 20. Instead of using aliphatic alcohol derivatives one may use polyalkyleneoxylated alkyl phenols in which the alkyl group is generally $C_8$—$C_{29}$, most preferably $C_8$—$C_{12}$ and the alkylenoxy groups may be as described above.

Preferred compositions comprise 1.0 to 10 parts coupling agent, 0.01 to 5 parts anti-foam and 20 to 70 parts biocide dissolved in sufficient water to make 100 parts. Preferably the composition contains from 30 to 50 parts biocide, 0.1 to 1 part antifoam and 0.5 to 5 parts coupler with the ratio antifoam: coupler generally being from 1:2 to 1:10, most preferably about 1:5. All parts and percentages are by weight and the weight of biocide, anti-foam and coupler is measured as the weight of the active ingredient.

The following is an example of the invention.

1.5 parts of a primary alcohol ethoxylate in which the primary alcohol is a $C_{13}$—$C_{15}$ fraction of aliphatic alcohols and has been ethoxylated with 11 ethyleneoxy groups is mixed with 0.35 parts of a silicone based anti-foam and 98.15 parts of a 40% solution of bis(chlorophenol)monosulphide in water.

The resultant composition is a stable homogeneous product that can be dosed by conventional means into the recirculating water of a cooling tower at a rate of 200 ppm (providing 80 ppm of the biocide) without any foaming occurring.

When this dosage is effected into water contaminated with *Legionella pneumophila* it is observed that within a very few hours of starting dosing there is no further evidence of *Legionella* in the water.

**Claims**

1. A method of inhibiting or preventing the growth of *Legionella* bacteria in the water of a recirculating cooling system by adding a biocide to the water characterised in that the biocide is a bis(monohalophenol)biocide, preferably bis-(chlorophenol) monosulphide.

2. A method according to claim 1 characterised in that the bis(monohalophenol) biocide is a water soluble compound of the formula

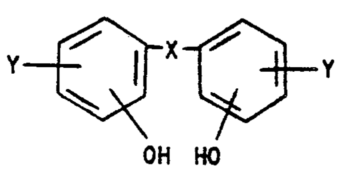

in which the groups Y may be the same or different and represent halogen atoms, and the group X represents a divalent radical selected from alkylene groups and hetero atoms, preferably bis(chlorophenol) monosulphide.

3. A method according to either claim 1 or claim 2 characterised in that the amount of biocide is sufficient to cause substantial foaming and an anti-foam, preferably a silicone anti-foam, is also added to the water.

4. A method according to any one of claims 1 to 3 characterised in that the amount of bis-(monohalophenol) included in the water is from 40 to 1,000 ppm, preferably 80 to 200 ppm.

5. A biocidal composition containing an aqueous solution of a biocide for inhibiting or preventing the growth of legionella bacteria in the water of a recirculating cooling system and characterised in that the biocide is a water soluble compound of the formula

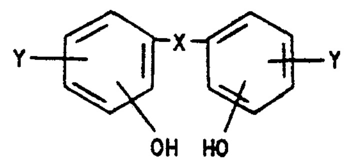

in which the groups Y may be the same or different and represent halogen atoms and the group X represents a divlanet radical selected from alkylene groups and hetero atoms, preferably bis(chlorophenol) monosulphide and the composition additionally contains an anti-foam, preferably a silicone antifoam.

6. A composition according to claims 5 characterised in that it additionally contains a coupling agent that holds the anti-foam in homogeneous distribution in the composition but that permits it to serve as an anti-foam when the composition is added to bulk water.

7. A composition according to claim 6 characterised in that the coupling agent is an non-ionic surfactant, preferably a polyalkyleneoxylated aliphatic alcohol or a polyalkyleneoxylated alkyl phenol.

8. A composition according to claim 7 characterised in that the coupling agent is a primary alcohol containing 12 to 18 carbon atoms, polyalkyleneoxylated with from 5 to 20 alkylenoxy groups selected from ethylenoxy and propylenoxy.

9. A composition according to any of claims 6 to 8 characterised in that it comprises 20 to 70 parts biocide, 0.1 to 10 parts coupling agent and 0.01 to 5 parts anti-foam, together with water to make 100 parts.

10. A method according to claim 1 characterised in that the biocide is included in the water by adding to the water a composition according to any of claims 5 to 9.

**Ansprüche**

1. Verfahren zum Inhibieren oder Verhindern des Wachstums von *Legionella*-Bakterien im Wasser eines rezirkulierenden Kühlsystems durch Zugabe eines Biozids zum Wasser, dadurch gekennzeichnet, daß das Biozid ein bis (Monohalophenol)-Biozid, vorzugsweise bis (Chlorphenol)-monosulfid ist.

2. Verfahren nach Anspruch 1, dadurch gekennzeichnet, daß das bis (Monohalophenol)-Biozid eine wasserlösliche Verbindung der Formel

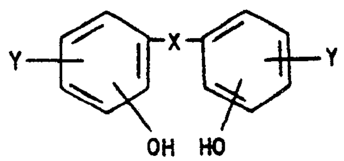

darstellt, in denen die Gruppen Y gleich oder verschieden sein können und Halogen-Atome darstellen, und die Gruppe X ein zweibindiger Rest ist, der aus Alkylen-Gruppen oder Hetero-Atomen ausgewählt wird, vorzugsweise bis (Chlorphenol)-monosulfid.

3. Verfahren nach Anspruch 1 oder 2, dadurch gekennzeichnet, daß die Menge des Biozids ausreicht, um ein erhebliches Schäumen zu bewirken, und daß ein Antischaum, vorzugsweise ein Silikon-Antischaum, ebenfalls zum Wasser hinzugefügt wird.

4. Verfahren nach irgendeinem der Ansprüche 1 bis 3, dadurch gekennzeichnet, daß die Menge an bis (Monohalophenol), die im Wasser aufgenommen ist, von 40 bis 1000 ppm reicht, vorzugsweise von 80 bis 200 ppm.

5. Biozidische Zusammensetzung, enthaltend eine wässrige Lösung eines Biozids zum Inhibieren oder Verhindern des Wachstums von Legionella-Bakterien im Wasser eines rezirkulierenden Kühlsystems, dadurch gekennzeichnet, daß das Biozid eine wasserlösliche Verbindung der Formel

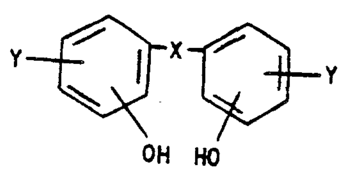

ist, in der die Gruppen Y gleich oder verschieden sein können und Halogen-Atome darstellen, und daß die Gruppe X einen zweibindigen Rest darstellt, der aus Alkylengruppen und Hetero-Atomen ausgewählt ist, vorzugsweise bis (Chlorphenol)-Monosulfid, und daß die Zusammensetzung zusätzlich einen Antischaum, vorzugsweise einen Silikonantischaum umfaßt.

6. Zusammensetzung nach Anspruch 5, dadurch gekennzeichnet, daß sie zusätzlich ein Kupplungsreagenz umfaßt, das den Antischaum in homogener Verteilung in der Zusammensetzung hält, jedoch ihm ermöglicht, als Antischaum zu dienen, wenn die Zusammensetzung in entsprechende Wassermengen zugegeben wird.

7. Zusammensetzung nach Anspruch 6, dadurch gekennzeichnet, daß das Kupplungsreagenz ein nicht-ionischer grenzflächenaktiver Stoff ist, vorzugsweise ein polyalkylenoxylierter, aliphatischer Alkohol oder ein polyalkylenoxyliertes Alkylphenol.

8. Zusammensetzung nach Anspruch 7, dadurch gekennzeichnet, daß das Kupplungsreagenz ein primärer Alkohol mit 12 bis 18 Kohlenstoffatomen ist, der mit 5 bis 20 Alkylenoxygruppen polyalkylenoxyliert ist, die aus Äthylenoxy und Propylenoxy ausgewählt werden.

9. Zusammensetzung nach irgendeinem der Ansprüche 6 bis 8, dadurch gekennzeichnet, daß sie 20 bis 70 Teile Biozid, 0,1 bis 10 Teile Kupplungsreagenz und 0,01 bis 5 Teile Antischaum umfaßt, die zusammen mit Wasser 100 Teile ergeben.

10. Verfahren nach Anspruch 1, dadurch gekennzeichnet, daß das Biozid im Wasser dadurch enthalten ist, daß man eine Zusammensetzung nach irgendeinem der Ansprüche 5 bis 9 dem Wasser hinzufügt.

**Revendications**

1. Un procédé pour empêcher ou éviter la croissance de bactéries Legionella dans l'eau d'un système réfrigérant avec recyclage, caractérisé en ce que le biocide est un bis(monohalogénophénol), de préférence un thiobis(chlorophénol).

2. Un procédé selon la revendication 1, caractérisé en ce que le biocide du type bis(monohalogénophénol) est un composé soluble dans l'eau de formule

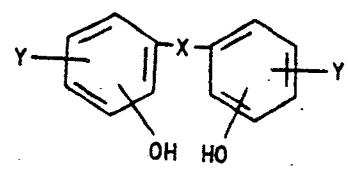

dans laquelle les groupes Y peuvent être indentiques ou différents et représentent des atomes d'halogène et le groupe X représente un radical divalent choisi parmi les groupes alkylènes et les hétéroatomes, de préférence un thiobis(monochlorophénol).

3. Un procédé selon la revendication 1 ou 2, caractérisé en ce que la quantité de biocide est suffisante pour provoquer un moussage notable et un antimousse est également incorporé dans l'eau, de préférence un antimousse du type silicone.

4. Un procédé selon l'une quelconque des revendications 1 à 3, caractérisé en ce que la quantité de bis(monohalogénophénol) incorporée dans l'eau est de 40 à 1000 ppm, de préférence de 80 à 200 ppm.

5. Une composition biocide contenant une solution aqueuse d'un biocide pour empêcher ou éviter la croissance de bactéries Legionella dans l'eau d'un système réfrigérant avec recyclage et caractérisée en ce que le biocide est un composé soluble dans l'eau de formule

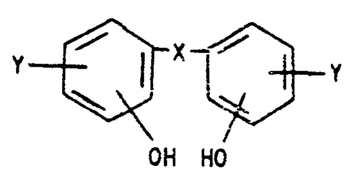

dans laquelle les groupes Y peuvent être identiques ou différents et représentent des atomes d'halogène et le groupe X représente un radical divalent choisi parmi les groupes alkylènes et les hétéroatomes, de préférence un thiobis(chlorophénol) et la composition contient en outre un antimousse, de préférence un antimousse du type silicone.

6. Une composition selon la revendication 5, caractérisée en ce qu'elle contient en outre un agent de couplage qui maintient l'antimousse en distribution homogène dans la composition, mais qui lui permet de servir d'antimousse lorsque la composition est ajoutée à la masse de l'eau.

7. Une composition selon la revendication 6, caractérisée en ce que l'agent de couplage est un tensioactif non ionique, de préférence un alcool aliphatique polyalkylèneoxylé ou un alkylphénol polyalkylèneoxylé.

8. Une composition selon la revendication 7, caractérisé en ce que l'agent de couplage est un alcool primaire contenant 12 à 18 atomes de carbone, polyalklèneoxylé par 5 à 20 groupes alkylèneoxy choisis parmi éthylènoxy et propylèneoxy.

9. Une composition selon l''une quelconque des revendications 6 à 8, caractérisée en ce qu'elle consiste en 20 à 70 parties de biocide, 0,1 à 10 parties d'agent de couplage et 0,01 à 5 parties d'antimousse, avec de l'eau pour faire 100 parties.

10. Un procédé selon la revendication 1, caractérisée en ce que le biocide est incorporé dans l'eau en ajoutant à cette eau une composition selon l'une quelconque des revendications 5 à 9.

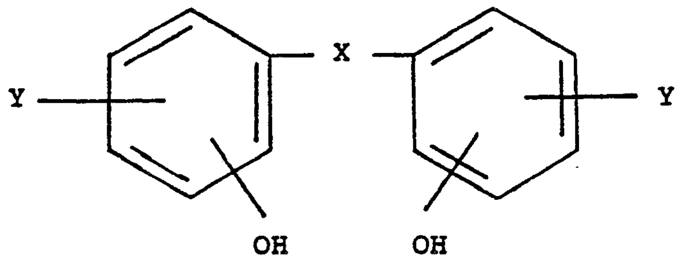

Fig. 1